# EUROPÄISCHE PATENTANMELDUNG

(11) **EP 2 133 828 A2**
(43) Veröffentlichungstag der Anmeldung: **16.12.2009**
(21) Anmeldenummer: 09007623.3
(22) Anmeldetag: 09.06.2009
(51) Int. Cl.: G06K 19/077

(54) **Verfahren zum Einbauen eines Chipmoduls in einen Chipkartenkörper**

(30) Priorität: 11.06.2008 DE 102008027771
(71) Anmelder: Giesecke & Devrient GmbH, 81677 München (DE)
(72) Erfinder: Barak, Renée-Lucia, 82008 Unterhaching (DE); Tarantino, Thomas, 83410 Laufen (DE); Drescher, Georg, 83607 Holzkirchen (DE); Schröder, Sönke, 81541 München (DE); Ojster, Albert, 81373 München (DE); Griesmeier, Robert, 83052 Heufeldmühle (DE); Schürch, Uwe, 83707 Bad Wiessee (DE)
(74) Vertreter: Branzka, Thomas

(57) **Zusammenfassung**

Die Erfindung betrifft Verfahren zum Einbauen eines Chipmoduls (3) in einen Chipkartenkörper (1). Gemäß einem ersten Aspekt der Erfindung wird das Chipmodul (3) aus einem Modulband (8) herausgetrennt, insbesondere mittels eines Stanzwerkzeugs ausgestanzt, in die Kavität (2) eines Chipkartenkörpers (1) eingesetzt und dort dauerhaft fixiert. Hierbei erfolgt das dauerhafte Fixieren des Chipmoduls (3) durch einen Zweikomponentenkleber. Eine Komponente (11) des Klebers wird in die Kavität (2) des Chipkartenkörpers (1) aufgetragen und die andere Komponente (10) auf das Modulband (8). Die beiden Komponenten kommen erst beim Einsetzen des herausgetrennten Chipmoduls (3) in die Kavität (2) in Kontakt und beginnen zu reagieren und auszuhärten. Es wird keine zusätzliche Hitze benötigt und somit erfolgt keine thermische Verformung des Chipkartenkörpers (1) und dadurch keine Beeinträchtigung der optischen Qualität der Kartenrückseite (4).

## Beschreibung

Die vorliegende Erfindung betrifft Verfahren zum Einbauen eines Chipmoduls in einen Chipkartenkörper.

Bei der Herstellung von Chipkarten werden die Chipkartenkörper und die Chipmodule zunächst getrennt voneinander hergestellt und in einem Schritt während des Herstellungsprozesses zusammengefügt. Hierzu weist ein Chipkartenkörper eine Kavität auf, die beispielsweise bei aus Folien laminierten Kartenkörpern gefräst sein kann. Die Chipmodule sind auf einem Modulband angeordnet, werden aus diesem herausgetrennt, insbesondere mittels eines Stanzstempels ausgestanzt, und anschließend in die Kavität des Kartenkörpers eingesetzt und dort dauerhaft fixiert. Dieser Schritt wird auch Implantieren genannt.

Um eine sichere Befestigung des Chipmoduls in dem Kartenkörper zu gewährleisten, kann beispielsweise eine Kleberschicht verwendet werden, die durch Hitze aktiviert wird. Hierbei wird die Kleberschicht auf die Unterseite des Modulbandes zusammen mit einer Schutzfolie aufgebracht. Die Schutzfolie wird vor dem Heraustrennen und Einsetzen des Chipmoduls wieder abgezogen. Beim Einsetzen wird die Kleberschicht durch Druck und Hitze aktiviert, so dass das Chipmodul mit dem Chipkartenkörper die gewünschte dauerhafte Verbindung eingeht.

Die benötigte Hitze zum Aktivieren der Heißkleberschicht bedeutet eine große Belastung für das empfindliche elektronische Chipmodul sowie für den Chipkartenkörper. Da der Chipkartenkörper aus Kunststoff besteht und die Rückseite der Kavität sehr dünn ist, können aufgrund der benötigten Mindest-Aktivierungszeit und der einwirkenden Mindest-Aktivierungswärme thermisch bedingte Deformationen des Chipkartenkörpers auftreten. Diese sind insbesondere auf der Rückseite der Chipkarte zu sehen und beeinträchtigen das optische Erscheinungsbild der Chipkarte.

Aufgabe der vorliegenden Erfindung ist es, die optische Qualität der Chipkartenrückseite bezüglich thermischer Verformungen beim Einbauen eines Chipmoduls in einen Chipkartenkörper zu verbessern.

Diese Aufgabe wird durch die Verfahren gemäß den unabhängigen Ansprüchen, die dabei Alternativlösungen bilden, gelöst. Vorteilhafte Weiterbildungen und Ausgestaltungen sind in davon abhängigen Ansprüchen angegeben. Alle in Form einer Folge von Erfindungsaspekten vorgeschlagenen Alternativlösungen haben übereinstimmend den Vorteil, daß eine starke Erwärmung der herzustellenden Chipkarten bei der Herstellung vermieden wird, wodurch sich verformungsfreie Oberflächen erzeugen lassen.

Die Erfindung wird anhand der folgenden Zeichnungen beschrieben. Es zeigen:
Figur 1 einen Querschnitt durch einen Chipkartenkörper und ein Chipmodul vor dem Einsetzen bei Verwendung eines Zweikomponentenklebers.
Figur 2 einen Querschnitt durch einen Chipkartenkörper und ein Chipmodul vor dem Einsetzen mit einer Kleberschicht auf dem Chipmodul.
Figur 3 einen Querschnitt durch einen Chipkartenkörper und ein Chipmodul vor dem Einsetzen mit einer Kleberschicht in der Kavität des Chipkartenkörpers.
Figur 4 einen Querschnitt durch einen Chipkartenkörper und ein Chipmodul vor dem Einsetzen, wobei das Modulband mit Kleber gefüllte Kapseln enthält.
Figur 5 einen Querschnitt durch einen Chipkartenkörper und ein Chipmodul vor dem Einsetzen, wobei in dem Chipkartenkörper eine Kleberschicht als Zwischenschicht integriert ist.
Figur 6 einen Querschnitt durch einen Chipkartenkörper und ein Chipmodul nach dem Einsetzen mit einer die Rückwand des Chipkartenkörpers durchdringenden Injektionsnadel.
Figur 7 einen Querschnitt durch einen Chipkartenkörper und ein Chipmodul vor dem mechanischen Fügen, wobei der Vergusskörper umgedreht kegelstumpfförmig ausgebildet ist.
Figur 8 einen Querschnitt durch einen Chipkartenkörper und ein Chipmodul vor dem mechanischen Fügen, wobei die Kavität Hinterschneidungen aufweist.
Figur 9 einen Querschnitt durch einen Chipkartenkörper und ein Chipmodul vor dem mechanischen Fügen mit Widerhaken an dem Chipmodul und entsprechenden Gegenstücken in der Kavität.
Figur 10 einen Querschnitt durch einen Chipkartenkörper und ein Chipmodul vor dem mechanischen Fügen, wobei Nagelstifte durch das Modulband gesteckt sind.
Figur 11 einen Querschnitt durch einen Chipkartenkörper und ein Chipmodul vor dem mechanischen Fügen, wobei die Kavität Stifte und das Chipmodul entsprechende Löcher aufweist.
Figur 12 einen Querschnitt durch einen Chipkartenkörper und ein Chipmodul vor dem Einsetzen ohne Kleber.
Figur 13 einen Chipkartenkörper und ein Chipmodul nach dem Einsetzen in Draufsicht, wobei das Chipmodul ähnlich einem Puzzleteil ausgebildet ist.
Figur 14 einen Querschnitt durch einen Chipkartenkörper, bei dem das Chipmodul beim Laminieren der Schichten eingebracht wurde.
Figur 15 einen Querschnitt durch einen Chipkartenkörper, bei dem das Chipmodul zusammen mit einer Trägerfolie auflaminiert wurde.
Figur 16 einen Querschnitt durch eine Spritzgussform, in der ein Chipmodul platziert ist.
Figur 17 eine Seitenansicht einer Vorrichtung zum Ausstanzen direkt über der Kavität und Einpressen des Chipmoduls mittels eines Stanzstempels.
Figur 18 eine Seitenansicht einer Vorrichtung, bei der die Karten senkrecht stehend auf einer Rolle befördert werden.

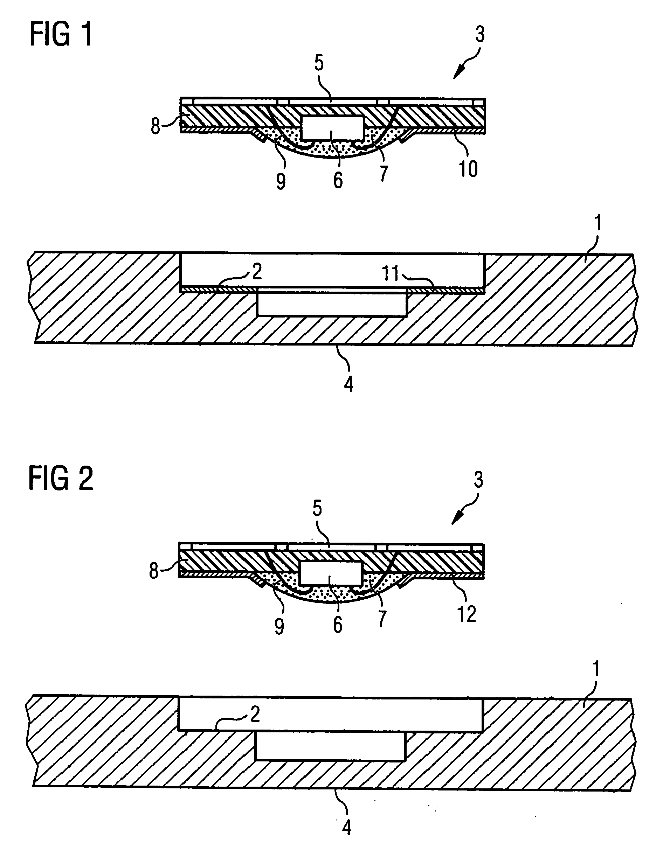

Figur 1 zeigt einen Chipkartenkörper 1 und ein Chipmodul 3 vor dem Einsetzen, wobei gemäß einem ersten Aspekt der Erfindung auf dem Chipmodul 3 eine erste Komponente 10 eines Mehrkomponentenklebers und in der Kavität 2 eine zweite Komponente 11 des Mehrkomponentenklebers aufgebracht ist. Das Chipmodul 3 umfasst einen Chip 6, der auf der Rückseite eines Modulbands 8 montiert und durch einen Vergusskörper 7 geschützt ist. Über Durchkontaktierungen 9 in Form von Drähten steht der Chip 6 in Verbindung mit Kontaktflächen 5 auf der Vorderseite des Modulbands 8.

Gemäß dem ersten Aspekt der vorliegenden Erfindung wird das Chipmodul 3 mittels des Mehrkomponentenklebers (mindestens Zweikomponentenkleber) in der Kavität 2 des Chipkartenkörpers 1 dauerhaft fixiert. Dabei wird die erste Kleberkomponente 11 in die Kavität 2 des Chipkartenkörpers 1 und die zweite Kleberkomponente 10 beispielsweise als Klebestreifen auf das Modulband 8 des Chipmoduls 3 aufgebracht. Alternativ können die beiden Kleberkomponenten 10,11 auch Teil des Chipkartenkörpermaterials und des Materials des Modulbands 8 des Chipmoduls 3 sein. Beim Einsetzen des Chipmoduls 3 in die Kavität 2 des Chipkartenkörpers 1 kommen die beiden Kleberkomponenten 10,11 in Kontakt und reagieren miteinander. Dadurch erfolgt eine feste und dauerhafte Fixierung des Chipmoduls 3 in dem Chipkartenkörper 1.

Da die beiden Kleberkomponenten 10,11 bis zum Einbauen des Chipmoduls 3 getrennt bleiben, vereinfacht sich die Verarbeitung. Zum einen entfällt ein Mischvorgang der beiden Komponenten 10, 11 und zum anderen tritt keine vorzeitige Aushärtung des Klebers ein. Da die Aushärtung des Klebers allein durch den Kontakt der beiden Komponenten 10, 11 initiiert wird, wird zudem bei diesem Verfahren keine Hitze zum Aktivieren des Klebers benötigt, wodurch eine thermische Verformung insbesondere der Kartenrückseite 4 vermieden wird. Das optische Erscheinungsbild der fertigen Chipkarte wird so von dem Einbauverfahren des Chipmoduls 3 nicht beeinträchtigt.

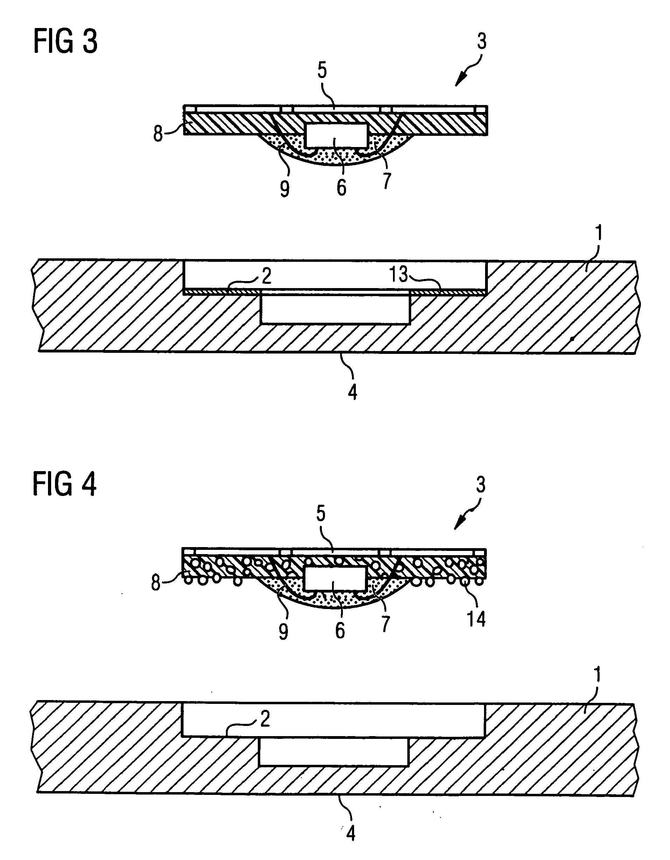

Figuren 2 und 3 zeigen ebenfalls ein Chipmodul 3 vor dem Einsetzen in einen Chipkartenkörper 1. Die dauerhafte Fixierung erfolgt dabei mittels einer Kleberschicht 12, die auf das Chipmodul 3 aufgebracht ist (Figur 2), oder alternativ mittels einer Kleberschicht 13, die in die Kavität 2 des Chipkartenkörpers 1 eingebracht ist (Figur 3). Es ist außerdem möglich, beide Kleberschichten 12 und 13 aufzubringen, die sich dann allerdings im Gegensatz zu den einzelnen Komponenten des vorgenannten Mehrkomponentenklebers chemisch nicht voneinander unterscheiden. Erfindungsgemäß ist der Einsatz von Klebstoffen möglich, die auf unterschiedliche Weise aktiviert werden und aushärten.

So wird gemäß einem zweiten Aspekt der vorliegenden Erfindung ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem zur dauerhaften Fixierung des Chipmoduls 3 ein unter Sauerstoffausschluss aushärtender Kleber verwendet wird, der durch Sauerstoffentzug reagiert. Solche Kleber werden auch anaerob härtende Klebstoffe genannt. Der Klebstoff wird entweder auf das Modulband 8 oder in die Kavität 2 aufgebracht. Beim Einpressen des Chipmoduls 3 in die Kavität 2 entweicht die Luft und damit auch der Sauerstoff zwischen dem Chipmodul 3 und dem Chipkartenkörper 1.

Durch den Sauerstoffentzug erfolgt die Reaktion des Klebers ohne weitere Einwirkung von Hitze, und es entsteht eine dauerhafte Verbindung zwischen Chipmodul 3 und Chipkartenkörper 1. Zusätzlich kann an der Chipkarte ein Vakuum angelegt werden, um den Sauerstoffentzug und damit die Aushärtung des Klebers zu beschleunigen. Die optische Qualität der Kartenrückseite 4 wird verbessert, da keine thermische Verformung auftritt.

In ähnlicher Weise wird gemäß einem dritten Aspekt der vorliegenden Erfindung ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem das Chipmodul 3 in der Kavität 2 des Chipkartenkörpers 1 mittels eines Klebers fixiert wird, der in Kontakt mit Luftfeuchtigkeit beginnt, auszuhärten. Dazu wird ein Granulat eines Polyurethan-Klebers erwärmt und aufgeschmolzen und der dann flüssige Kleber in die Kavität 2 des Chipkartenkörpers 1 eingebracht. Dieser auch als reaktiver Hotmelt-Kleber bezeichnete Klebstoff beginnt bereits beim Dosieren aufgrund der Luftfeuchtigkeit auszuhärten. Daher wird das Chipmodul 3 sofort nach dem Dosieren mit einem Stempel in die Kavität 2 des Kartenkörpers 1 eingepresst, so dass sich der noch flüssige Kleber gleichmäßig verteilt, dabei aber nicht herausquetscht. Bevorzugt ist (in alleine hierin beschriebenen Ausführungsbeispielen) eine Schichtdicke des Klebers von 20 µm bis 100 µm.

Bei diesem Verfahren wird zwar der heiße Kleber in die Kavität 2 eingebracht, allerdings wird keine zusätzliche Aktivierungshitze durch einen Schweißstempel von außen zugeführt. Daher treten auch bei diesem Verfahren keine nennenswerten thermischen Verformungen und optischen Beeinträchtigungen der Kartenrückseite 4 auf.

Gemäß einem vierten Aspekt der vorliegenden Erfindung erfolgt die Aktivierung des Aushärtungsprozesses des Klebers, der zur dauerhaften Fixierung des Chipmoduls 3 in der Kavität 2 des Chipkartenkörpers 1 verwendet wird, mittels UV-Licht. Es wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber, wobei der Kleber vor dem Einsetzen des Chipmoduls 3 durch Bestrahlung mit UV-Licht aktiviert wird, realisiert, in dem die vollständige Aushärtung des Klebers nach dem Schritt des Einsetzens des Chipmoduls 3 in die Kavität 2 des Chipkartenkörpers 1 ohne Einwirkung von UV-Licht erfolgt. Der zunächst flüssige Kleber wird in die Kavität 2 des Chipkartenkörpers 1 (Figur 3) und/oder auf die Rückseite des Modulbands 8 (Figur 2) dosiert und durch das Einpressen des Chipmoduls 3 so verteilt, dass wiederum eine Kleberschicht mit einer Schichtdicke von 20 µm bis 100 µm entsteht. Hierbei wird der Kleber vor dem Einsetzen des Chipmoduls 3 in die Kavität 2 durch UV-Strahlung aktiviert und benötigt nach dem Einsetzen des Chipmoduls 3 keine weitere Bestrahlung mit UV-Licht mehr.

Da der Kleber nach der Aktivierung durch UV-Licht vollständig im Dunkeln aushärten kann, wird kein UV-transparentes Fenster in dem Kartenkörper 1 benötigt. Zudem wird auch hier keine Aktivierungshitze benötigt. Es tritt demnach keine thermische Verformung auf. Weiterhin ist dieses Verfahren schneller und kostengünstiger als Verfahren mit Heißklebern, da zum einen die Kleberlaminierung auf das Modulband 8 und zum anderen die benötigte Oberflächenaufrauhung des Modulbands 8 wegfallen. Es können auch schwierig zu verklebende Materialien miteinander verklebt werden, wie beispielsweise Polycarbonat, Polyethylen oder Polypropylen als Kartenmaterial und Polyester oder Kapton als Material für das Modulband 8.

Gemäß einem fünften Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem zur dauerhaften Fixierung des Chipmoduls 3 in der Kavität 2 des Chipkartenkörpers 1 ein Haftkleber verwendet wird, der auf das Material des Modulbands 8 abgestimmt ist. Besonders kunststoffbasierte Chipmodule 3 sind aufgrund ihrer Flexibilität geeignet für die Verwendung von Haftkleber. Ein Haftkleber benötigt keine Aktivierungshitze und erlaubt somit ein Verfahren ohne thermische Verformungen auf der Kartenrückseite 4.

Gemäß einem sechsten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem der Kleber zum dauerhaften Fixieren des Chipmoduls 3 ein lösungsmittelhaltiger Flüssigkleber ist, der auf das Modulband 8 (Figur 2) oder in die Kavität 2 (Figur 3) aufgebracht wird. Durch Verdunstung des Lösungsmittels härtet der Kleber aus und benötigt keine Hitzeeinwirkung.

Gemäß einem siebten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem zur dauerhaften Fixierung des Chipmoduls 3 in der Kavität 2 des Chipkartenkörpers 1 ein Kleber eingesetzt wird, der nur bei Raumtemperatur (oder darüber) reagiert und aushärtet, jedoch im gekühlten Zustand bei einer Temperatur vonunter 0°C nicht aushärtet und verarbeitet werden kann. Hierzu wird ein entsprechendes Klebeband 12 bei einer Temperatur von unter 0°C auf das Modulband 8 aufgebracht, vorzugsweise in einem entsprechend gekühlten, thermisch abgeschlossenen Bereich. Ebenfalls in dem thermisch abgeschlossenen Bereich unter 0°C erfolgt dann das Heraustrennen des Chipmoduls 3 aus dem Modulband 8 sowie das Einsetzen des Chipmoduls 3 in die Kavität 2 des Chipkartenkörpers 1. Sobald das Chipmodul 3 eingesetzt ist, verlässt die Chipkarte den gekühlten Bereich und der Kleber beginnt nun bei Raumtemperatur auszuhärten. Durch die niedrigen Temperaturen treten keine thermischen Verformungen des Chipkartenkörpers 1, insbesondere dessen Rückseite 4 auf.

Gemäß einem achten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem ein Kleber verwendet wird, der nach dem Schritt des Einsetzens des Chipmoduls 3 in die Kavität 2 des Chipkartenkörpers 1 durch Veränderung der Zusammensetzung der den Chipkartenkörper 1 umgebenden Atmosphäre aushärtet. Auf das Chipmodul 3 und/ oder in die Kavität 2 des Chipkartenkörpers 3 wird ein Klebstoff aufgebracht, der an normaler Luft keine oder nur eine geringe Haftkraft aufweist. Nach dem Einsetzen des Chipmoduls 3 in die Kavität 2 des Chipkartenkörpers 1 wird die Chipkarte in eine mit einem speziellen Gas gefüllte Kammer gebracht. Durch diese Veränderung der atmosphärischen Zusammensetzung härtet der Kleber unter Einwirkung des Gases aus und führt zu einer dauerhaften Fixierung des Chipmoduls 3 in dem Chipkartenkörper 1. Auch bei diesem Verfahren treten keine thermischen Deformationen des Kartenkörpers 1 auf, da keine Aktivierungshitze benötigt wird.

Gemäß einem neunten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem mit dem Kleber gefüllte Kapseln 14 beim Schritt des Einsetzens des Chipmoduls 3 in die Kavität 2 des Chipkartenkörpers 1 durch Druck zerplatzen. Das Modulband 8 ist mit Kapseln 14 versehen, die rückseitig aufgebracht sind oder zumindest aus dem Modulband 8 rückseitig herausragen und mit einem vorzugsweise reaktiven Kleber gefüllt sind. Figur 4 zeigt schematisch ein solches Chipmodul 3, dessen Modulband 8 mit Kleber gefüllte Kapseln 14 enthält. Die Kapseln 14 werden entweder bei der Herstellung des Modulbands 8 in das Modulband 8 eingebracht oder das Modulband 8 wird in einem gesonderten Produktionsschritt mit den mit Kleber gefüllten Kapseln 14 beschichtet. Das Chipmodul 3 wird aus dem Modulband 8 herausgetrennt und mit einem Stempel unter Druck, aber vorzugsweise ohne Einwirkung von Hitze, in die Kavität 2 des Chipkartenkörpers 1 eingepresst. Aufgrund der speziellen Kapselwandung zerplatzen die Kapseln 14 dabei, und der Kleber verteilt sich auf der Kontaktfläche zwischen Chipmodul 3 und Chipkartenkörper 1. Der Kleber härtet aufgrund des Kontakts mit der Luft aus und fixiert das Chipmodul 3 dauerhaft in dem Kartenkörper 1 ohne hohe Temperatur und somit ohne thermische Verformung des Chipkartenkörpers 1.

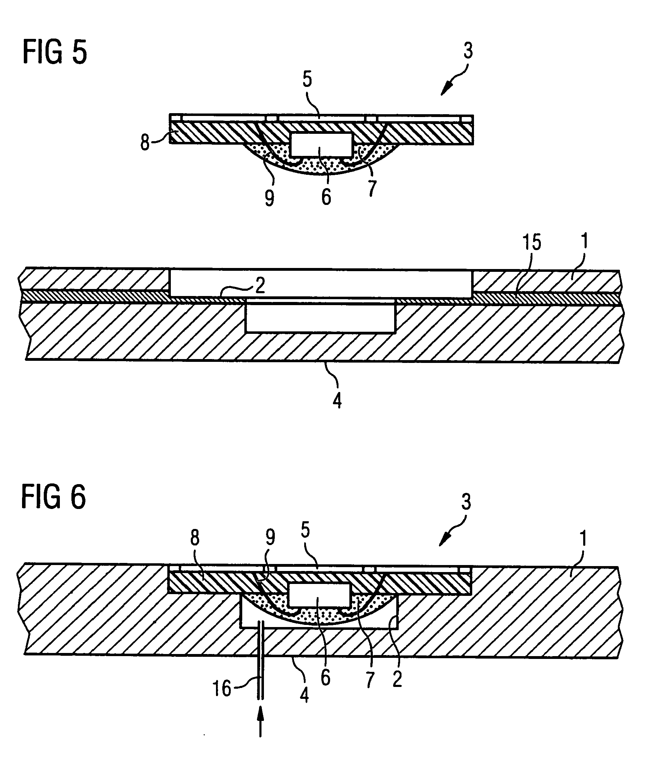

Figur 5 zeigt schematisch einen Querschnitt durch einen Chipkartenkörper 1, der gemäß einem zehnten Aspekt der vorliegenden Erfindung als Zwischenschicht eine Kleberschicht 15 umfasst, die beim Fräsen der Kavität 2 freigelegt wird. Auf die offene Kleberschicht 15 wird das Chipmodul 3 aufgesetzt. Der Kleber kann anschließend von der Rückseite 4 der Karte aus beispielsweise durch Infrarotstrahlung, insbesondere NIR-Strahlung, aktiviert werden. Da kein Heißstempel benötigt wird, kommt es nicht zu thermischen Verformungen und damit optischen Beeinträchtigungen des Chipkartenkörpers 1.

Gemäß einem elften Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem der Kleber nach dem Schritt des Einsetzens des Chipmoduls 3 mittels einer Injektionsnadel 16 von der Rückseite 4 des Chipkartenkörpers 1 in die Kavität 2 eingespritzt wird. Das Chipmodul 3 ohne Kleber wird in die Kavität 2 des Chipkartenkörpers 1 eingelegt und anschließend mit einem Stempel in Position gehalten. Der zur dauerhaften Fixierung des Chipmoduls 3 benötigte Kleber wird nun von der Kartenrückseite 4 aus durch die an der Stelle der Kavität 2 dünne Rückwand des Chipkartenkörpers 1 mit einer feinen Injektionsnadel 16 unter das Chipmodul 3 dosiert. Nach dem Herausziehen der Nadel 16 härtet der Kleber vollständig aus. Dieses Verfahren ist schematisch in Figur 6 dargestellt. Der Kleber wird, wie durch den Pfeil angedeutet, durch die Injektionsnadel 16 in die Kavität 2 eingespritzt.

Gemäß einem zwölften Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem die Stanzwerkzeuge zum Ausstanzen des Chipmoduls 3 aus dem Modulband 8 gekühlt werden. Dies mindert ein eventuelles Verkleben der Stanzwerkzeuge insbesondere auch bei der Verwendung von Niedertemperatur-Kleberfilmen oder doppelseitigem Klebeband. Durch den Einsatz von Niedertemperatur-Kleberfilmen oder doppelseitigem Klebeband kann ebenfalls auf den Einsatz von Aktivierungshitze verzichtet werden.

Es ist vorteilhaft, wenn der Kleber, der zur dauerhaften Fixierung des Chipmoduls 3 in dem Chipkartenkörper 1 dient, auf das Modulband 8 oder in die Kavität 2 des Chipkartenkörpers 1 aufgesprüht wird und nach dem Einsetzen des Chipmoduls 3 in die Kavität 2 vorzugsweise ohne Einwirkung von Aktivierungshitze aushärtet. Ebenfalls geeignet ist das Aufbringen des Klebers mittels Rakeln oder Dosieren.

Ein weiteres vorteilhaftes Verfahren zur Aufbringung des Klebers in die Kavität 2 des Chipkartenkörpers 1 ist der Tampondruck. Hierbei wird ein Stempel, der so genannte Tampon, in einen Behälter mit einem flüssigen oder zähflüssigen Kleber getaucht. Der Stempel, der an die Ausformung der Kavität 2 angepasst ist, nimmt eine bestimmt Menge Kleber auf und wird dann in die Kavität 2 gedrückt. Dabei wird der Kleber in die Kavität 2 übertragen. Das herausgetrennte Chipmodul 3 wird in die mit Kleber benetzte Kavität 2 eingesetzt und dort dauerhaft fixiert.

Weiter kann es vorteilhaft sein, wenn die Aufbringung des Klebers auf das Modulband 8 mittels klebergetränkter Rollen erfolgt. Die Rollen bestehen hierzu aus einem schwammähnlichen Material und können so den flüssigen Kleber aufnehmen. Während die Rollen rotieren, wird das Modulband 8 an den Rollen vorbeigeführt und so mit Kleber beladen. Anschließend wird ein Chipmodul 3 aus dem Modulband 8 herausgetrennt, in die Kavität 2 des Chipkartenkörpers 1 eingepresst und durch den Kleber dauerhaft fixiert. Gemäß einem dreizehnten Aspekt der vorliegenden Erfindung erfolgt die dauerhafte Fixierung des Chipmoduls 3 in der Kavität 2 des Chipkartenkörpers 1 durch mechanisches Fügen. Dies kann beispielsweise durch Einpressen des Chipmoduls 3 in die Kavität 2 realisiert werden. Dabei überlappen die Abmessungen des Chipmoduls 3 zumindest teilweise diejenigen des Chipkartenkörpers 1. Die rein mechanische Fixierung erfordert keine Einwirkung von Hitze und führt demnach nicht zu einer thermischen Deformation des Chipkartenkörpers 1.

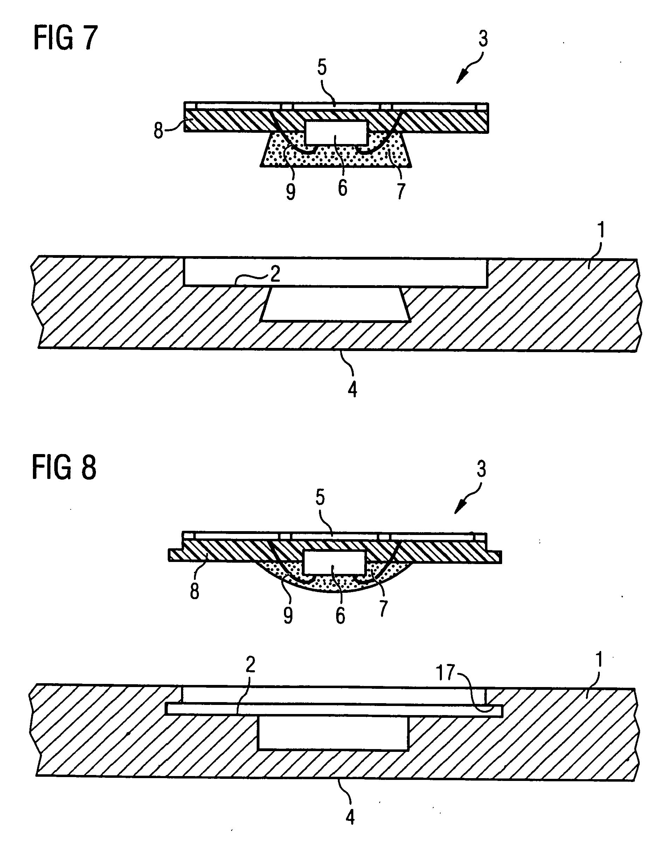

Gemäß einem bevorzugten Verfahren wird der Chipkartenkörper 1 beim mechanischen Fügen des Chipmoduls 3 in die Kavität 2 des Chipkartenkörpers 1 leicht gebogen. Dadurch kann das Chipmodul 3, welches im ungebogenen Zustand des Chipkartenkörpers 1 aufgrund seiner Form und der Form der Kavität 2 nicht in die Kavität 2 passt, in die Kavität 2 eingesetzt werden. Figur 7 zeigt ein solches Chipmodul 3 vor dem Einsetzen in die Kavität 2. Der Vergusskörper 7 weist hier eine umgedreht pyramidenstumpfförmige Form auf, und eine Vertiefung in der Kavität 2 ist entsprechend entgegengesetzt ausgebildet. Hierbei kann zur zusätzlichen Fixierung ein Klebstoff verwendet werden. Nach dem Einsetzen des Chipmoduls 3 bleibt es im ungebogenen Zustand des Chipkartenkörpers 1 in diesem verankert. Die Verankerung erfolgt in diesem Ausführungsbeispiel durch die spezielle Form des Vergusskörpers 7, da das Chipmodul 3 in den Chipkartenkörper 1 eingreifen kann. Bei diesem Verfahren sind keine weiteren Schritte, insbesondere keine Temperaturbeaufschlagung, nötig.

Figur 8 zeigt ein weiteres bevorzugtes Verfahren zum mechanischen Fügen, wobei das Chipmodul 3 einen größeren Durchmesser als die Kavität 2 an der Oberfläche des Chipkartenkörpers 1 aufweist. Um das Einsetzen des Chipmoduls 3 in die Kavität 2 zu ermöglichen, wird der Chipkartenkörper 1 vor dem Einsetzen des Chipmoduls 3 leicht gebogen. Die Kavität 2 weist eine entsprechend dimensionierte Hinterschneidung 17 auf, wodurch das Chipmodul 3 aufgrund seines Durchmessers im ungebogenen Zustand des Chipkartenkörpers 1 festgehalten wird. Das Chipmodul 3 kann eine Abstufung aufweisen, so dass es nach dem Einsetzen bündig mit der Kartenoberfläche abschließt. Da keine Erhitzung notwendig ist, wird das optische Erscheinungsbild der Chipkarte auch hier nicht durch thermische Verformungen beeinträchtigt.

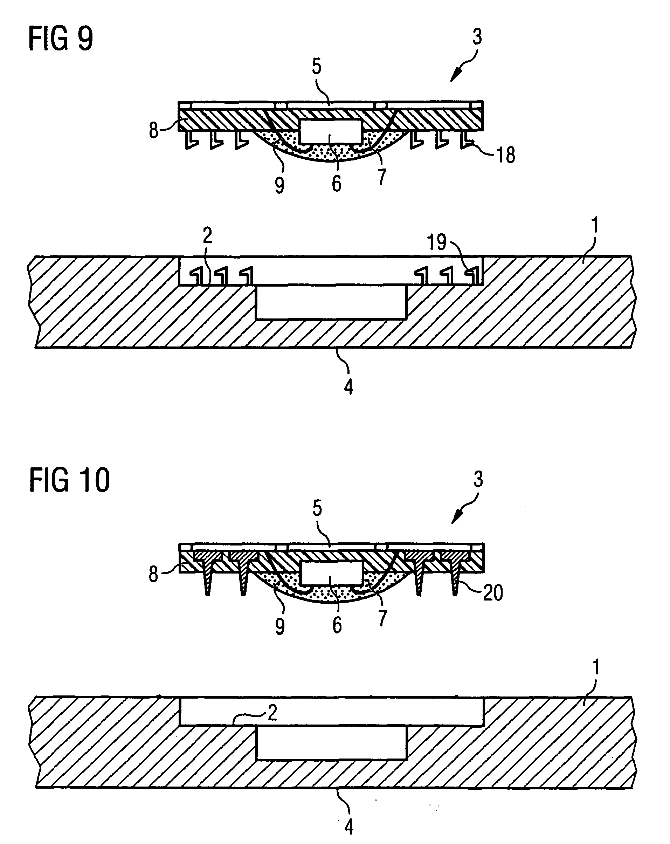

Bevorzugt kann das Modulband 8 zur dauerhaften, kleberlosen Fixierung des Chipmoduls 3 in der Kavität 2 des Chipkartenkörpers 1 Widerhaken 18 aufweisen. In Figur 9 ist ein solches Chipmodul 3 dargestellt. Nach dem Heraustrennen des Chipmoduls 3 aus dem Modulband 8 wird dieses in die Kavität 2 so eingesetzt, dass die Widerhaken 18 mit entsprechenden Gegenstücken 19 in der Kavität 2 des Chipkartenkörpers 1 mechanisch verhaken und das Chipmodul 3 so dauerhaft ohne Temperatureinwirkung fixieren. Die Widerhaken 18 können dabei bereits bei der Herstellung des Modulbands 8 berücksichtigt werden oder auch nachträglich geprägt oder herausgebogen werden.

In einem weiteren bevorzugten Verfahren wird das Chipmodul 3 in der Kavität 2 des Chipkartenkörpers 1 durch Tacker, Nagelstifte oder Nieten 20 befestigt. In Figur 10 ist ein Chipmodul 3 dargestellt, bei dem Stifte 20 durch das Modulband 8 hindurch gesteckt sind. Nach dem Heraustrennen des Chipmoduls 3 erfolgt die dauerhafte Fixierung des Chipmoduls 3 in der Kavität 2 mittels dieser Stifte 20, die beispielsweise auch Widerhaken aufweisen können. Zudem ist die Befestigung mit geraden, nagelförmigen Stiften 20 wie auch mit gebogenen, tackerförmigen Stiften möglich. Es wird keine Hitze benötigt, die zu thermischen Verformungen der Kartenrückseite 4 führen könnte.

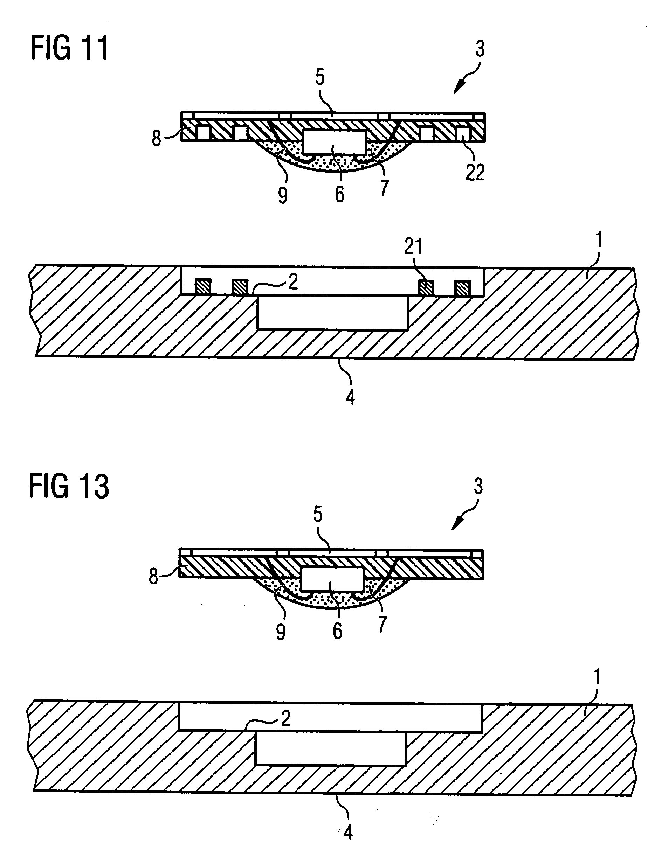

Bei einem in Figur 11 durch ein entsprechendes Chipmodul 3 und einen Chipkartenkörper 1 veranschaulichten, weiteren vorteilhaften Verfahren weist die Kavität 2 des Chipkartenkörpers 1 zwei oder mehr aus Kunststoff bestehende Stifte 21 auf. Diese können beispielsweise im Spritzguss entstanden sein. Das Chipmodul 3 weist Löcher 22 oder sacklochartige Vertiefungen in entsprechender Anordnung und mit entsprechendem Durchmesser auf. Beim Einsetzen des Chipmoduls 3 in die Kavität 2 wird das Chipmodul 3 auf die Stifte gesteckt und vorzugsweise verpresst. Hierbei können die Kunststoffstifte nach dem Einsetzen des Chipmoduls 3 aufgeschmolzen werden. Da keine flächige Hitze durch einen Heißstempel erzeugt wird, kommt es nicht zu nennenswerten thermischen Verformungen der fertigen Chipkarte.

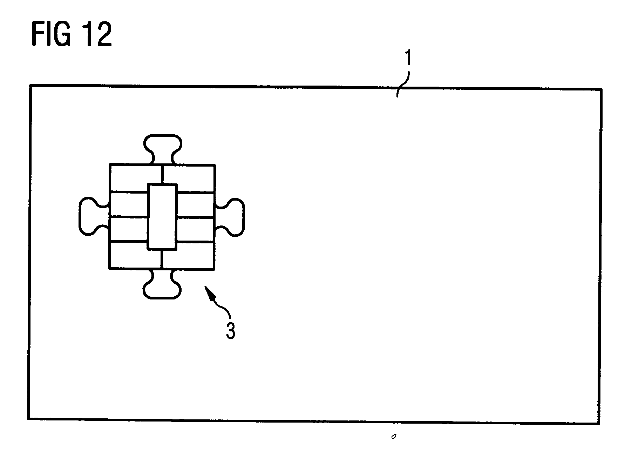

In Figur 12 sind ein Chipmodul 3 und ein Chipkartenkörper 1 ohne Kleberschichten oder mechanische Vorrichtungen zur Verankerung des Chipmoduls 3 in der Kavität 2 dargestellt. Die dauerhafte Fixierung erfolgt beispielsweise aufgrund gleicher Materialeigenschaften des Chipmoduls 3 und des Chipkartenkörpers 1 wie im Folgenden beschrieben.

Figur 13 zeigt schematisch ein ebenfalls bevorzugtes Ausführungsbeispiel, wobei das Chipmodul 3 ähnlich einem Puzzleteil ausgebildet ist. Die Kavität 2 des Chipkartenkörpers 1 weist dabei eine entsprechende passende Form auf, so dass das Chipmodul 3 wie ein Puzzleteil in die Kavität 2 eingesetzt werden kann. Dieses mechanische Einbauverfahren führt ebenfalls nicht zu optischen Einbußen auf der Kartenrückseite 4.

So wird gemäß einem vierzehnten Aspekt der vorliegenden Erfindung ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem nach dem Schritt des Einsetzens des Chipmoduls 3 der Chipkartenkörper 1 am Rand der Kavität 2 durch einen Laserstrahl aufgeschmolzen und dadurch das Chipmodul 3 dauerhaft fixiert wird. Das Chipmodul 3 wird zur dauerhaften Fixierung in der Kavität 2 des Chipkartenkörpers 1 lediglich am Rand mit der Kavität 2 verschweißt. Dies geschieht nach dem Einsetzen des Chipmoduls 3 in den Chipkartenkörper 1 mittels Laserstrahl oder Punktschweißen. Das Material des Chipkartenkörpers 1 wird dabei nur durch einen feinen Laserstrahl erwärmt, wobei das erweichte Material des Chipkartenkörpers 1 daraufhin das Chipmodul 3 umschließt und beim Erstarren dauerhaft fixiert. Es ist auch möglich, dass das Material des Modulbands 8 ebenfalls erwärmt und partiell aufschmilzt, so dass das Chipmodul 3 mit dem Kartenkörper 1 materialschlüssig verbunden wird. Das Einbringen von Energie durch den Laserstrahl kann linien- oder punktförmig erfolgen. Da bei diesem Verfahren nicht die gesamte Fläche des Chipmoduls 3 durch einen Stempel erhitzt wird, tritt keine nennenswerte thermische Verformung der Kartenrückseite 4 auf.

Gemäß einem fünfzehnten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem nach dem Schritt des Einsetzens des Chipmoduls 3 in die Kavität 2 das Chipmodul 3 und der Chipkartenkörper 3 durch Ultraschallschweißen miteinander verschweißt werden, insbesondere mittels mehrerer auf die Schweißstellen ausgerichteter Sonotroden. Mithin erfolgt das dauerhafte Fixieren des Chipmoduls 3 in der Kavität 2 des Chipkartenkörpers 1 mittels Ultraschallschweißen. Die hoch-frequente elektrische Energie wird in einem Ultraschallgenerator in hochfrequente mechanische Energie umgewandelt. Eine Sonotrode legt diese Energie an dem Kartenkörper 1 und dem Modulband 8 an, wodurch Wärme entsteht, mit der das Chipmodul 3 und der Chipkartenkörper 1 verschweißt werden. Hierbei ist der Einsatz eines Klebers nicht notwendig. Durch den Einsatz mehrerer Sonotroden, die gezielt auf die Schweißstellen gerichtet werden, entsteht nur eine lokale Erhitzung des Chipkartenkörpers 1.

Gemäß einem sechzehnten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem das Chipmodul 3 und /oder der Chipkartenkörper 1 nach dem Schritt des Einsetzens des Chipmoduls 3 durch Strahlung, vorzugsweise durch Mikrowellenstrahlung, zur Teilchenschwingung angeregt und dadurch erwärmt werden, so dass die dauerhafte Fixierung des Chipmoduls 3 in der Kavität 2 des Chipkartenkörpers 1 durch Verschmelzen erfolgt. Durch die Teilchenanregung erwärmen sich die Materialien und es entsteht dadurch eine dauerhafte Verbindung des Chipmoduls 3 in der Kavität 2 des Chipkartenkörpers 1 durch Verschmelzung.

Gemäß einem siebzehnten Aspekt der vorliegenden Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem das Chipmodul (3) und der Chipkartenkörper (1) aus dem gleichen oder zumindest miteinander verschmelzbarem Material bestehen und durch Temperatur und Druck dauerhaft miteinander verbunden werden. Vorzugsweise erfolgt die Verbindung von Chipmodul 3 und Chipkartenkörper 1 nur durch Druck und Temperatur. Es werden keine Klebersysteme benötigt.

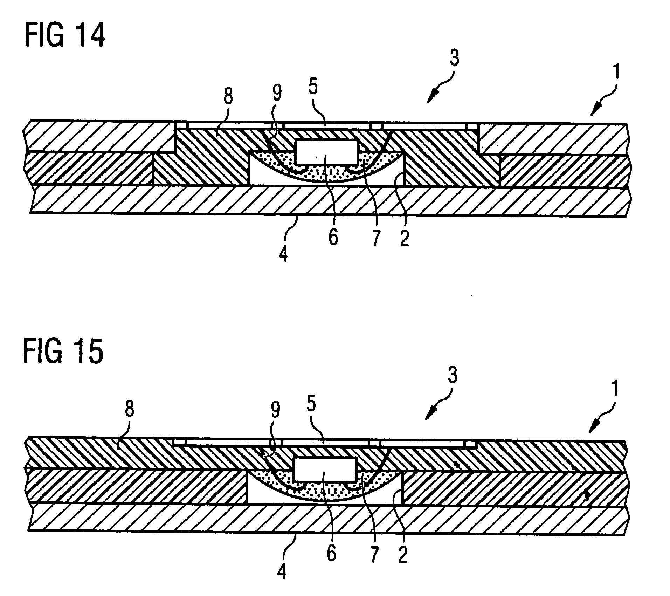

Gemäß einem achtzehnten Aspekt der Erfindung wird ein Verfahren zum Einbauen eines Chipmoduls 3 in einen Chipkartenkörper 1 mit den Schritten: Heraustrennen des Chipmoduls 3 aus einem Modulband 8, Einsetzen des Chipmoduls 3 in eine Kavität 2 des Chipkartenkörpers 1 und dauerhaftes Fixieren durch Kleber realisiert, in dem das Chipmodul 3 in den Chipkartenkörper 1 eingebracht wird, bevor die Schichten miteinander laminiert werden, und in der Kavität vorzugsweise formschlüssig gehalten wird. Das Chipmodul 3 wird in den Schichtaufbau eines aus mehreren Schichten bestehenden Chipkartenkörpers eingesetzt, bevor die Schichten unter Anwendung von Druck und Wärme miteinander verbunden werden. Dadurch erfolgt eine dauerhafte, vorzugsweise formschlüssige, Fixierung des Chipmoduls 3. Nach dem Laminieren wird der Chipkartenkörper 1 mit dem bereits eingebauten Chipmodul 3 aus dem laminierten Bogen herausgetrennt und die Chipkarte ist fertig. Ein Querschnitt durch eine solche Chipkarte ist in Figur 14 dargestellt. Das Modulband 8 weist hier eine Kavität 2 auf, die den Vergusskörper 7 umfasst. Mittels einer Abstufung am Rande des Modulbands 8 erfolgt eine formschlüssige Fixierung des Moduls zwischen den verschiedenen laminierten Schichten des Chipkartenkörpers 1. Durch die gleichmäßige Erwärmung der gesamten Fläche der Chipkarte während des Laminierens erfolgt keine thermische Verformung der Kartenrückseite 4 im Bereich des Chipmoduls 3. Die optische Qualität der Chipkarte wird somit nicht beeinträchtigt.

Figur 15 veranschaulicht schematisch einen neunzehnten Aspekt der vorliegenden Erfindung. Er richtet sich auf ein Verfahren zum Einbauen eines Chipmoduls 3 in einen Chipkartenkörper 1, wobei das Chipmodul 3 auf einer Trägerfolie vorliegt und zusammen mit der Trägerfolie, die vorzugsweise aus PVC oder Polyester besteht, in einem Laminierprozeß des Chipkartenkörpers 1 mit dem Chipkartenkörper 1 so verbunden wird, daß sich die Trägerfolie über den gesamten Chipkartenkörper 1 erstreckt. Dabei ist das Modulband 8 als Trägerfolie ausgebildet, auf der das Chipmodul 3 vorliegt. Das Chipmodul wird mit der sich über die gesamte Fläche des Chipkartenkörpers 1 erstreckende Trägerfolie in einem Laminierprozess des Chipkartenkörpers 1 in den Chipkartenkörper 1 eingesetzt. Die Trägerfolie, die beispielsweise aus PVC oder Polyester besteht, hat dabei Kartenformat oder Bogenformat und ist insgesamt kostengünstiger als ein übliches Modulband für das Chipmodul 3. Da die Trägerfolie mit dem Chipmodul 3 gemeinsam mit den anderen Folien des Chipkartenkörpers 1 oder nachträglich auf den Chipkartenkörper 1 laminiert wird, tritt keine punktuelle Einwirkung von Hitze auf und es entsteht keine optische Beeinträchtigung der Kartenrückseite 4 durch thermische Verformung.

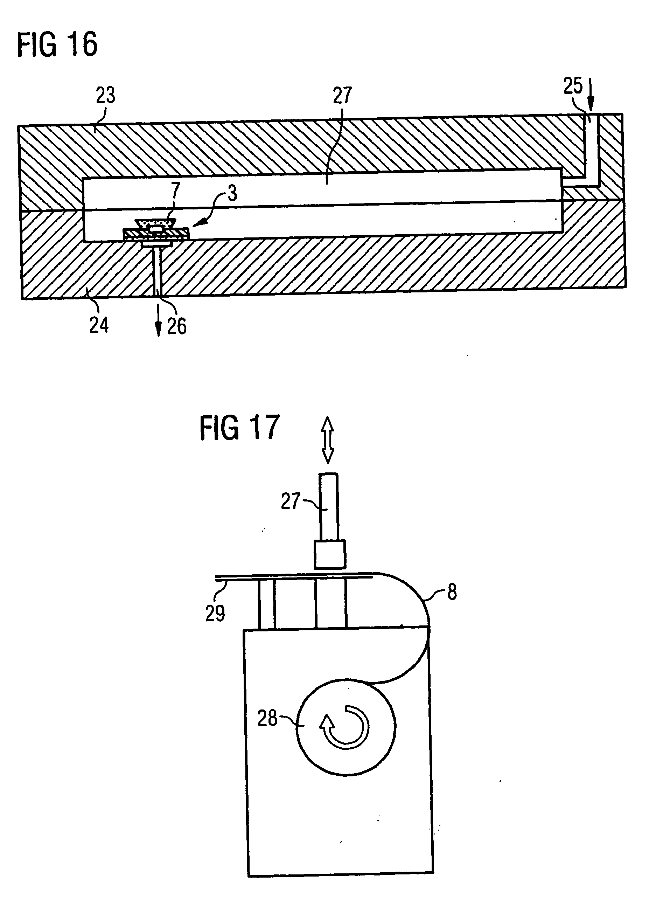

Gemäß einem zwanzigsten Aspekt der vorliegenden Erfindung wird ein Verfahren zum Einbauen eines Chipmoduls 3 in einen Chipkartenkörper 1 realsiert, wobei das Chipmodul 3 aus einem Modulband 8 herausgetrennt wird, und das Chipmodul 3 während des Spritzgießens des Chipkartenkörpers 1 in den Chipkartenkörper 1 eingebracht wird. Das Chipmodul 3 wird beim Spritzgießen des Chipkartenkörpers 1 in den Chipkartenkörper 1 eingesetzt. Wie in Figur 16 dargestellt, wird das Chipmodul 3 dabei beispielsweise mit einer Ansaugvorrichtung 26 in einer Kavität 27 einer Spritzgießform in Position gehalten, während es umspritzt wird. Der Kunststoff für den Chipkartenkörper 1 wird über einen Kanal 25 in die Kavität 27 zwischen den beiden Hälften 23 und 24 der Spritzgießform zugeführt. Zur dauerhaften Fixierung kann das Chipmodul 3 durch seine spezielle Form formschlüssig in dem Chipkartenkörper 1 festgehalten werden. Insbesondere kann der Vergusskörper 7 des Chipmoduls 1 wiederum umgedreht pyramidenstumpfförmig sein. Auch bei diesem Verfahren tritt keine thermische Verformung der Chipkarte auf, da die Fixierung des Chipmoduls 3 gleichzeitig mit dem Herstellungsprozess des Chipkartenkörpers 1 stattfindet.

Gemäß einer ersten bevorzugten Ausgestaltung der vorliegenden Erfindung erfolgt das Fräsen der Kavität 2, das Einsetzen des Chipmoduls 3 in die Kavität 2 und das dauerhafte Fixieren des Chipmoduls 3 in der Kavität 2 vor dem Heraustrennen des Chipkartenkörpers 1 aus einem mehrere Chipkartenkörper 1 umfassenden laminierten Bogen oder Band.

Es ist vorteilhaft, wenn das Chipmodul 2 nach dem Ausstanzen aus dem Modulband 8 nicht weit transportiert und gedreht werden muss. In Figur 17 ist ein Verfahren gemäß einer zweiten bevorzugten Ausgestaltung der vorliegenden Erfindung schematisch veranschaulicht, bei dem das Modulband 8 so über die Kavität 2 des Chipkartenkörpers 1 geführt wird, dass das Chipmodul 3 direkt fluchtend über der Kavität 2 liegt. Das Modulband wird dazu von einer Rolle 28 abgerollt und mittels einer Führung 29 entsprechend geführt. Das Ausstanzen erfolgt mittels eines Stanzstempels 27, der das ausgestanzte Chipmodul 3 in einer geradlinigen Bewegung in den darunter liegenden Chipkartenkörper 1 einpresst. Dies erleichtert das Einbauen des Chipmoduls 3, da keine komplizierte Mechanik zum Transportieren des ausgestanzten Chipmoduls 3 erforderlich ist.

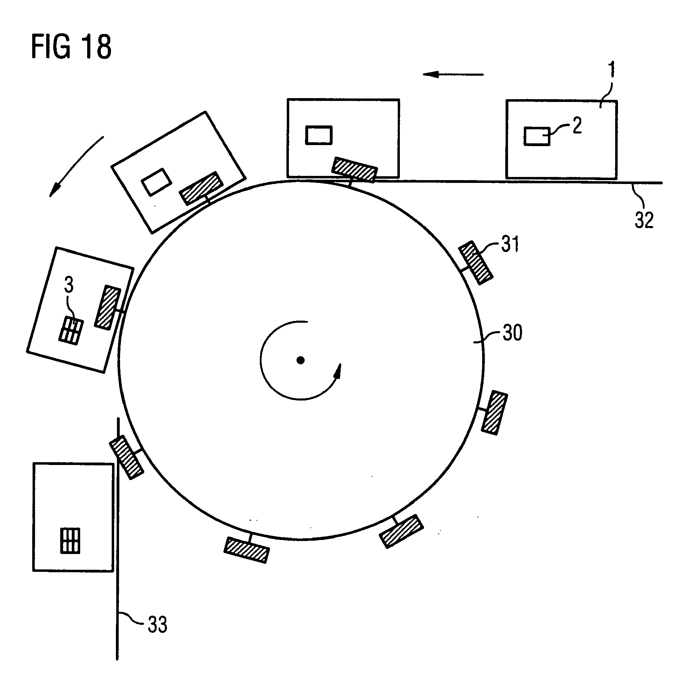

Figur 18 zeigt eine dritte bevorzugte Ausgestaltung der vorliegenden Erfindung. Dabei wird der Chipkartenkörper 1 senkrecht auf einer seiner Kanten stehend auf einer Zuführung 32 zugeführt. Während des Einsetzens des Chipmoduls 3 wird der Chipkartenkörper 1 weiter auf einer Rolle 30 geführt, wobei er auf der Kante senkrecht entlang des Umfangs der Rolle 30 steht und von einer Haltevorrichtung 31 gehalten wird. Dabei können auf der Rolle 30 mehrere Chipkartenkörper 1 gleichzeitig geführt und mit Chipmodulen 3 versehen werden. Die Chipmodule 3 werden mittels Stempeln (nicht dargestellt) in einer Bewegung parallel zur Achse der Rolle 30 in die Chipkartenkörper 1 eingesetzt und dort dauerhaft fixiert. Die fertigen Chipkarten werden über eine Führung 33 von der Rolle 30 abgeführt. Die Prozesszeit kann durch dieses Verfahren verkürzt werden, da mehrere Karten gleichzeitig verarbeitet werden können.

Die dauerhafte Fixierung des Chipmoduls 3 in dem Chipkartenkörper 1 kann bei den in Figuren 17 und 18 dargestellten Verfahren auf unterschiedliche Weise unter Verwendung von Kleber, mechanischen Verfahren oder anderen oben beschriebenen Verfahren erfolgen.

## Patentansprüche

1. Verfahren zum Einbauen eines Chipmoduls (3) in einen Chipkartenkörper (1), wobei das Chipmodul (3) aus einem Modulband (8) herausgetrennt, in eine Kavität (2) des Chipkartenkörpers (1) eingesetzt und dort dauerhaft fixiert wird, **dadurch gekennzeichnet, dass** die dauerhafte Fixierung des Chipmoduls (3) in der Kavität (2) des Chipkartenkörpers (1) durch mechanisches Fügen erfolgt.

2. Verfahren nach Anspruch 1, **dadurch gekennzeichnet, dass** das Fügen des Chipmoduls (3) in die Kavität (2) des Chipkartenkörpers (1) durch Einpressen erfolgt.

3. Verfahren nach Anspruch 1, **dadurch gekennzeichnet, dass** der Chipkartenkörper (1) während des Schritts des Fügens des Chipmoduls (3) in die Kavität (2) des Chipkartenkörpers (1) gebogen wird und das Chipmodul (3) im ungebogenen Zustand des Chipkartenkörpers (1) aufgrund der Form eines Vergusskörpers (7) des Chipmoduls (3) und der Form der Kavität (2) in die Kavität (2) eingreift.

4. Verfahren nach Anspruch 1, **dadurch gekennzeichnet, dass** der Chipkartenkörper (1) während des Schritt des Fügens des Chipmoduls (3) in die Kavität (2) des Chipkartenkörpers (1) gebogen wird und das Chipmodul (3) im ungebogenen Zustand des Chipkartenkörpers (1) von einer Hinterschneidung (17) in der Kavität (2) festgehalten wird.

5. Verfahren nach Anspruch 1, **dadurch gekennzeichnet, dass** das Modulband (8) Widerhaken (18) aufweist, die beim Schritt des Fügens des Chipmoduls (3) in die Kavität (2) des Chipkartenkörpers (1) in entsprechende Gegenstücke (19) in der Kavität (2) mechanisch einhaken.

6. Verfahren nach Anspruch 4, **dadurch gekennzeichnet, dass** das Fügen des Chipmoduls (3) in die Kavität (2) des Chipkartenkörpers (1) mechanisch durch Tacker, Nagelstifte oder Nieten (20) erfolgt, die vorzugsweise bereits vor dem Schritt des Einsetzens des Chipmoduls (3) durch das Modulband (8) hindurch gesteckt werden.

7. Verfahren nach Anspruch 1, **dadurch gekennzeichnet, dass** die Kavität (2) des Chipkartenkörpers (1) Stifte (21) und das Modulband (8) entsprechende Löcher (22) oder Vertiefungen aufweist, die beim Fügen des Chipmoduls (3) in die Kavität (2) des Chipkartenkörpers (1) ineinander eingreifen, wobei die Stifte (21) vorzugsweise aus Kunststoff bestehen und weiter bevorzugt nach dem Fügeprozess aufgeschmolzen werden.

8. Verfahren zum Einbauen eines Chipmoduls (3) in einen Chipkartenkörper (1), wobei das Chipmodul (3) aus einem Modulband (8) herausgetrennt, in eine Kavität (2) des Chipkartenkörpers (1) eingesetzt und dort dauerhaft fixiert wird, **dadurch gekennzeichnet, dass** das Chipmodul (3) und /oder der Chipkartenkörper (1) nach dem Schritt des Einsetzens des Chipmoduls (3) durch Strahlung, vorzugsweise Mikrowellenstrahlung, zur Teilchenschwingung angeregt und **dadurch** erwärmt werden, so dass die dauerhafte Fixierung des Chipmoduls (3) in der Kavität (2) des Chipkartenkörpers (1) durch Verschmelzen erfolgt.

9. Verfahren zum Einbauen eines Chipmoduls (3) in einen aus mehreren Schichten bestehenden Chipkartenkörper (1), wobei das Chipmodul (3) aus einem Modulband (8) herausgetrennt, in eine Kavität (2) des Chipkartenkörpers (1) eingesetzt und dort dauerhaft fixiert wird, **dadurch gekennzeichnet, dass** das Chipmodul (3) in den Chipkartenkörper (1) eingebracht wird, bevor die Schichten miteinander laminiert werden, und in der Kavität vorzugsweise formschlüssig gehalten wird.

10. Verfahren nach einem der Ansprüche 1 bis 12, **dadurch gekennzeichnet, dass** ein Fräsen der Kavität (2), das Einsetzen des Chipmoduls (3) in die Kavität (2) und das dauerhafte Fixieren des Chipmoduls (3) in der Kavität (2) vor einem Heraustrennen des Chipkartenkörpers (1) aus einem mehrere Chipkarten umfassenden Bogen oder Band erfolgt.

11. Verfahren zum Einbauen eines Chipmoduls (3) in einen Chipkartenkörper (1), wobei das Chipmodul (3) aus einem Modulband (8) herausgetrennt, in eine Kavität (2) des Chipkartenkörpers (1) eingesetzt und dort dauerhaft durch Kleber fixiert wird, **dadurch gekennzeichnet, dass** vor dem Schritt des Einsetzens auf das Chipmodul (3) eine erste Komponente (10) eines Mehrkomponentenklebers und in die Kavität (2) eine zweite Komponente (11) des Mehrkomponentenklebers aufgebracht werden, die erst beim Schritt des Einsetzens in Kontakt kommen, so dass sie miteinander reagieren und eine dauerhafte Verbindung eingehen.

12. Verfahren zum Einbauen eines Chipmoduls (3) in einen Chipkartenkörper (1), wobei das Chipmodul (3) aus einem Modulband (8) herausgetrennt, in eine Kavität (2) des Chipkartenkörpers (1) eingesetzt und dort dauerhaft durch Kleber fixiert wird, **dadurch gekennzeichnet, dass** mit dem Kleber gefüllte Kapseln (14) des Chipmoduls (3) beim Schritt des Einsetzens des Chipmoduls (3) in die Kavität (2) des Chipkartenkörpers (1) durch Druck zerplatzen.

13. Verfahren zum Einbauen eines Chipmoduls (3) in einen Chipkartenkörper (1), wobei das Chipmodul (3) aus einem Modulband (8) herausgetrennt, in eine Kavität (2) des Chipkartenkörpers (1) einsetzt und dort dauerhaft durch Kleber fixiert wird, **dadurch gekennzeichnet, dass** als Kleber ein unter Sauerstoffausschluss aushärtender Kleber verwendet wird.

14. Verwendung eines Verfahrens nach einem der Ansprüche 1 bis 13 zur Herstellung einer Chipkarte, die einen Chipkartenkörper (1) sowie ein in eine Kavität (2) des Chipkartenkörpers (1) eingesetztes und durch Kleber dauerhaft fixiertes Chipmodul (3) umfaßt.

15. Chipkarte, umfassend einen Chipkartenkörper (1) und ein in eine Kavität (2) des Chipkartenkörpers (1) eingesetztes und durch Kleber dauerhaft fixiertes Chipmodul (3), hergestellt nach einem Verfahren gemäß einem der Ansprüche 1 bis 14.
